# FASCICULE DE BREVET EUROPEEN

(11) **EP 0 887 231 B1**
(45) Date de publication et mention de la délivrance du brevet: **29.08.2001**
(21) Numéro de dépôt: 98401531.3
(22) Date de dépôt: 22.06.1998
(51) Int. Cl.: B60Q 3/04

(54) **Tableau de commande de véhicule comportant des moyens d'éclairage**
Bedienungstafel mit Beleuchtungseinrichtung für Kraftfahrzeuge
Control panel with lighting device for vehicle

(30) Priorité: 27.06.1997 FR 9708153
(43) Date de publication de la demande: 30.12.1998
(73) Titulaire: AFE Plasturgie, 95580 Andilly (FR)
(72) Inventeur: Michel, François, 78310 Maurepas (FR)
(74) Mandataire: Bezault, Jean

(56) Documents cités:
- EP-A- 0 777 108
- FR-A- 2 464 856
- US-A- 3 752 974
- US-A- 5 485 291
- US-A- 5 537 300

## Description

L'invention concerne un tableau de commande pour véhicule, comprenant une façade présentant une face avant portant des repères et/ou symboles propres à être éclairés à partir d'une source lumineuse.

Un tableau de commande selon le préambule de la revendication 1 est connu de EP-A-777 108.

On connaît déjà des tableaux de commande de ce type, qui sont utilisés notamment pour le chauffage et/ou l'aération de l'habitacle d'un véhicule. Dans ces tableaux de commande connus, la façade est traversée par un ou plusieurs organes de commande, généralement des boutons rotatifs ou des curseurs, comportant chacun un index propre à être mis en regard d'un repère et/ou d'un symbole porté par la face avant.

Cette face avant comporte habituellement un revêtement opaque, alors que les repères et/ou symboles sont transparents ou colorés de manière à pouvoir laisser passer la lumière issue de la source lumineuse.

Dans les tableaux de commande connus, la façade est portée par un boîtier qui forme boîte à lumière et qui loge la source lumineuse, celle-ci pouvant comprendre une ou plusieurs lampes disposées en des endroits choisis à l'intérieur du boîtier. Cette source lumineuse est généralement portée par une plaque de circuit imprimé située parallèlement et à distance de la façade.

Il est connu aussi de prévoir un ou plusieurs guides de lumière pour amener la lumière de la source lumineuse vers les repères et/ou symboles à éclairer.

Ces tableaux de commande connus ont pour principal inconvénient d'être encombrants et complexes à réaliser, du fait que la source lumineuse doit être portée par un circuit imprimé situé à distance de la façade, ce qui augmente la profondeur du boîtier.

De plus, il est généralement nécessaire de prévoir plusieurs lampes pour pouvoir éclairer convenablement tous les repères et/ou symboles que comporte la façade, cette dernière ayant le plus souvent une forme oblongue.

On connaît aussi, d'après EP-A-0 777 108, un tableau indicateur de véhicule automobile dont la façade comprend une plaque transparente formant guide de lumière, dans laquelle est diffusée de la lumière provenant de sources lumineuses. Toutefois, ce tableau ne permet pas de diriger la lumière de manière précise vers les repères et/ou symboles à éclairer.

L'invention a notamment pour but de surmonter les inconvénients précités.

Elle propose à cet effet un tableau de commande du type défini en introduction, dans lequel une ouverture est conformée pour définir en périphérie une série de lentilles de formes choisies, propres à diriger des faisceaux lumineux dans l'épaisseur de la plaque transparente.

Ainsi, l'éclairage des repères et/ou symboles s'effectue par des faisceaux lumineux formés dans l'épaisseur même de la plaque transparente à partir de la source lumineuse. Les lentilles formées à la périphérie de l'ouverture doivent être réalisées de façon précise pour permettre de capter l'énergie lumineuse issue de la source lumineuse et de former des faisceaux lumineux, sous forme de pinceaux linéaires, envoyés dans des directions choisies à l'intérieur même de la plaque transparente. Ensuite, ces faisceaux sont renvoyés vers les repères et/ou symboles à éclairer par des moyens déflecteurs disposés en des endroits choisis.

Ces déflecteurs peuvent être réalisés en creux ou en relief sur un plan parallèle à la face avant ou légèrement incliné par rapport à la face avant, ce qui augmente leur efficacité.

Des caractéristiques optionnelles de l'invention, complémentaires ou alternatives, sont énoncées ci-après :
- l'ouverture est de forme générale circulaire, et les lentilles sont de type convexe, ont des distances focales choisies et sont placées en des positions angulaires choisies.
- L'ouverture traverse l'épaisseur de la plaque transparente depuis la face avant jusqu'à une face opposée, ou face arrière.
- Les lentilles sont inclinées vers la face arrière pour permettre leur réalisation par un moulage et un démoulage de la plaque transparente.
- Les lentilles dépassent du plan de la face arrière et se raccordent à cette dernière par des parties coniques permettant ainsi d'avoir une épaisseur de la plaque la plus réduite.
- Les moyens déflecteurs comportent des stries en creux ou en relief formées dans la face arrière de la plaque transparente, à l'opposé de la face avant, les stries étant réalisées dans un plan parallèle ou légèrement incliné par rapport à la face avant.
- La plaque transparente comporte en outre au moins un miroir placé en un endroit choisi pour dévier un faisceau lumineux.
- Le miroir est formé par un bord droit d'une fente traversant l'épaisseur de la plaque transparente.
- La face avant est munie d'un revêtement opaque portant les repères et/ou symboles à éclairer.
- La source lumineuse est une lampe ou une diode électroluminescente placée au centre de l'ouverture, et située à distance du plan de la face avant.
- Le revêtement opaque est également opaque dans la région de l'ouverture.
- Le revêtement opaque est un film sérigraphié fixé à la face avant par collage ou par surmoulage.
- La face arrière, opposée à la face avant, porte un revêtement de couleur claire, par exemple de couleur blanche, ou métallisé.
- La plaque transparente est formée en un matériau du type "verre organique" par exemple en polyméthacrylate de méthyle ou en polycarbonate.

Dans la description qui suit, faite seulement à titre d'exemple, on se réfère aux dessins annexés, sur lesquels :
- la figure 1 est une vue en élévation de la face avant d'une façade d'un tableau de commande selon l'invention;
- la figure 2 est une vue en élévation de la plaque transparente de la façade de la figure 1;
- la figure 3 est un détail à échelle agrandie de la plaque transparente de la figure 2;
- la figure 4 est une vue en coupe selon la ligne IV-IV de la figure 3;
- la figure 5 est une vue en coupe à échelle agrandie selon la ligne V-V de la figure 2.

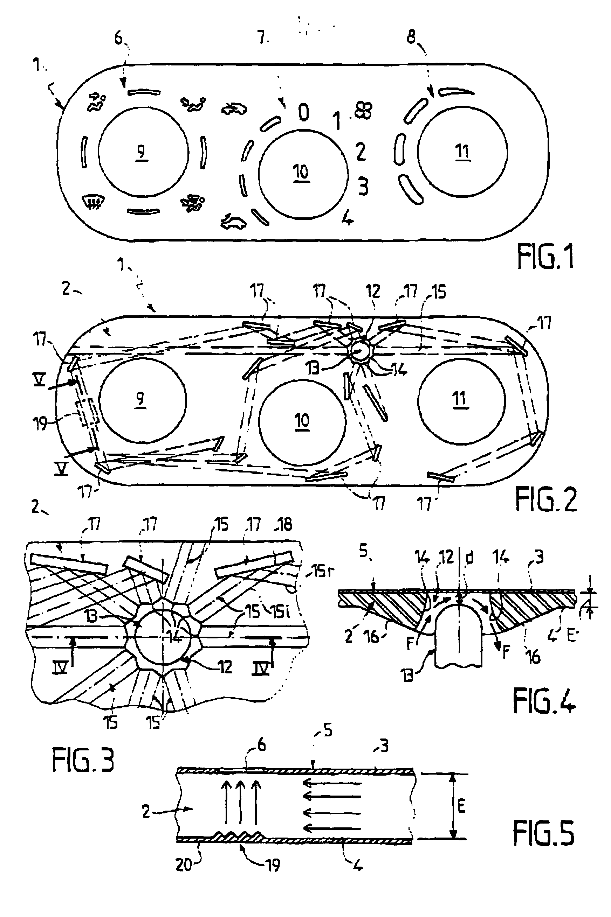

On se réfère tout d'abord à la figure 1 qui représente une façade 1 d'un tableau de commande destiné au chauffage et à l'aération de l'habitable d'un véhicule. Cette façade 1 comporte une plaque transparente 2 (figures 2 à 5) de forme générale oblongue présentant une face avant 3 qui est destinée à être orientée vers l'intérieur de l'habitacle, donc vers les passagers, et une face arrière 4 opposée à la face avant 3 (figures 4 et 5). Sur la face avant 3 est rapporté par collage ou surmoulage un film opaque 5 formé par sérigraphie et dans lequel sont formés des repères et/ou symboles 6, 7, 8 disposés respectivement autour de trois trous circulaires 9, 10, 11. Ces trois trous sont destinés dans l'exemple à être traversés par des organes de manoeuvre (non représentés) du type bouton rotatif. Ces derniers servent dans l'exemple à commander respectivement la distribution de l'air dans l'habitacle, la vitesse d'un pulseur d'air et la valeur de la température.

La plaque transparente 2 est réalisée par moulage d'une matière plastique transparente du type "verre organique", qui peut être par exemple du polyméthacrylate de méthyle (PMMA) ou du polycarbonate. Elle présente une épaisseur E qui est de l'ordre de 2 millimètres.

Dans l'épaisseur de la plaque transparente 2 est formée une ouverture circulaire 12 servant de logement à une lampe 13 disposée en partie centrale (figures 3, 4 et 5).

La structure de l'ouverture et de la lampe sera maintenant décrite plus particulièrement en référence aux figures 3 et 4.

L'ouverture 12 est conformée de manière précise lors du moulage de la plaque transparente pour former, à sa périphérie, une série de lentilles convexes 14, qui sont au nombre de 10 dans l'exemple. Ces lentilles 14 sont réalisées de façon précise de manière que chacune d'elles possède une distance focale choisie et soit en outre située dans une position angulaire choisie par rapport à la plaque 2. La distance focale est de préférence la même pour toutes les lentilles.

La lampe 13 est placée sensiblement au centre de l'ouverture 12 et à une distance d du plan de la face avant, donc du film 5, comme montré à la figure 4. Il est en effet souhaitable que la lampe ne vienne pas au contact du film 5, d'une part pour ne pas provoquer un échauffement local de celui-ci et, d'autre part, pour permettre une circulation d'air comme montré par les flèches F sur la figure 4.

La lumière émise par la lampe 13 vient frapper les lentilles 14, lesquelles permettent ensuite de former des faisceaux lumineux 15, au nombre de 10 dans l'exemple, qui sont émis dans l'épaisseur même de la plaque, entre la face avant 3 et la face arrière 4, et parallèlement à ces dernières. Ces faisceaux 15 sont chacun réalisés sous la forme d'un pinceau lumineux étroit qui est dirigé dans un endroit choisi.

En effet, il a été constaté, de manière tout à fait surprenante, que l'on pouvait ainsi former de minces pinceaux lumineux pouvant être ensuite utilisés pour éclairer les symboles et/ou repères 6, 7, 8.

Comme on le voit sur la figure 4, les lentilles sont inclinées vers la face arrière 4 pour permettre leur réalisation lors du moulage et du démoulage de la plaque transparente. Autrement dit, ces lentilles doivent être réalisées avec une dépouille pour permettre le démoulage à partir de la face arrière.

Les lentilles dépassent dû plan de la face arrière et se raccordent à cette dernière par des parties coniques 16 (figure 4). Ceci permet de réaliser des lentilles de plus grandes dimensions et de procurer une meilleure concentration lumineuse pour former indiduellement les faisceaux lumineux 15.

Les faisceaux lumineux 15 peuvent être déviés à l'intérieur de la plaque transparente par des miroirs 17. Ces miroirs sont formés simplement par des fentes allongées 17. Chacune des fentes comporte un bord droit 18 (figure 3) qui s'étend perpendiculairement aux faces 3 et 4 et qui permet d'intercepter un faisceau 15 et de le réfléchir dans une autre direction.

Ainsi, un faisceau 15 comprend un premier tronçon 15i (faisceau incident) et est réfléchi par un miroir 17 pour former un tronçon réfléchi 15r (figure 3).

Pour assurer l'éclairage des repères et/ou symboles, il est nécessaire de défléchir le faisceau pour le rabattre en direction des symboles, c'est-à-dire lui faire subir une déviation à 90° dans la direction du film 5.

Pour cela, la plaque transparente comporte des moyens déflecteurs 19 (figures 2 et 5) placés en des endroits choisis. Dans l'exemple, ces moyens déflecteurs comprennent une série de stries formées au niveau de la face arrière 4 et propres à renvoyer au moins en partie le faisceau vers un symbole 6. Ce symbole est réalisé de manière transparente, éventuellement coloré, alors que le film 5 est opaque dans son ensemble, y compris dans la région de la lampe 13.

Sur la figure 5, les stries 19 en creux et en relief sont réalisées dans un plan parallèle à la face avant 3. Elles pourraient aussi être formées dans un plan légèrement incliné par rapport à la face avant.

La face arrière 4 porte avantageusement, mais pas obligatoirement, un revêtement 20 de couleur claire, par exemple de couleur blanche, comme montré à la figure 5 pour faciliter le guidage de la lumière dans l'épaisseur même de la plaque transparente. Il peut s'agir aussi d'un revêtement métallisé.

Bien entendu, l'invention n'est pas limitée à la forme de réalisation décrite précédemment à titre d'exemple et on peut envisager d'autres variantes.

Ainsi, les moyens déflecteurs ou les moyens formant miroir peuvent être réalisés de différentes manières, à condition qu'ils permettent de dévier le faisceau lumineux.

L'invention permet de réaliser ainsi un tableau de commande de structure plus simple et plus compacte que les tableaux de la technique antérieure.

## Revendications

1. Tableau de commande pour véhicule, comprenant une façade (1) qui comprend une plaque transparente (2) en un matériau conducteur de la lumière et qui présente une face avant (3) portant des repères et/ou symboles (6,7,8) propres à être éclairés à partir d'une source lumineuse (13),
la source lumineuse (13) étant disposée dans une ouverture (12) ménagée dans la plaque transparente (2), et la plaque transparente (2) comportant des moyens déflecteurs (19) pour diriger les faisceaux (15) vers les repères et/ou symboles (6,7,8) à éclairer, **caractérisé en ce que** ladite ouverture (12) est conformée pour définir en périphérie une série de lentilles (14) de forme choisie, propres à diriger des faisceaux lumineux (15) dans l'épaisseur de la plaque transparente (2).

2. Tableau de commande selon la revendication 1, **caractérisé en ce que** l'ouverture (12) est de forme générale circulaire et en ce que les lentilles (14) sont de type convexe, ont des distances focales choisies et sont placées en des positions angulaires choisies.

3. Tableau de commande selon l'une des revendications 1 et 2, **caractérisé en ce que** l'ouverture (12) traverse l'épaisseur (E) de la plaque transparente (2) depuis la face avant (3) jusqu'à une face opposée ou face arrière (4).

4. Tableau de commande selon la revendication 3, **caractérisé en ce que** les lentilles (14) sont inclinées vers la face arrière (4) pour permettre leur réalisation par un moulage et démoulage de la plaque transparente.

5. Tableau de commande selon l'une des revendications 3 et 4, **caractérisé en ce que** les lentilles (14) dépassent du plan de la face arrière (4) et se raccordent à cette dernière par des parties coniques (16).

6. Tableau de commande selon l'une des revendications 1 à 5, **caractérisé en ce que** les moyens déflecteurs (19) comportent des stries en creux ou en relief formées dans la face arrière (4) de la plaque transparente (2), à l'opposé de la face avant (3), les stries étant réalisées dans un plan parallèle ou légèrement incliné par rapport à la face avant.

7. Tableau de commande selon l'une des revendications 1 à 6, **caractérisé en ce que** la plaque transparente (2) comporte en outre au moins un miroir (17) placé en un endroit choisi pour dévier un faisceau lumineux (15).

8. Tableau de commande selon la revendication 7, **caractérisé en ce que** le miroir (17) est formé par un bord droit (18) d'une fente traversant l'épaisseur de la plaque transparente (2).

9. Tableau de commande selon l'une des revendications 1 à 8, **caractérisé en ce que** la face avant (3) est munie d'un revêtement opaque (5) portant les repères et/ou symboles (6,7,8) à éclairer.

10. Tableau de commande selon l'une des revendications 1 à 9, **caractérisé en ce que** la source lumineuse (13) est une lampe ou une diode électroluminescente placée au centre de l'ouverture (12) et située à distance (d) du plan de la face avant (3).

11. Tableau de commande selon les revendications 9 et 10, prises en combinaison, **caractérisé en ce que** le revêtement opaque (5) est également opaque dans la région de l'ouverture (12).

12. Tableau de commande selon l'une des revendications 9 à 11, **caractérisé en ce que** le revêtement opaque (5) est un film sérigraphié fixé à la face avant par collage ou par surmoulage.

13. Tableau de commande selon l'une des revendications 1 à 12, **caractérisé en ce que** la face arrière (4), opposée à la face avant (3), porte un revêtement (20) de couleur claire, en particulier de couleur blanche, ou métallisé.

14. Tableau de commande selon l'une des revendications 1 à 13, **caractérisé en ce que** la plaque transparente (2) est formée en une matière du type verre organique, par exemple en polyméthacrylate de méthyle ou en polycarbonate.

## Patentansprüche

1. Bedienungstafel für ein Fahrzeug, enthaltend eine Front (1), die eine durchsichtige Platte (2) aus einem lichtleitfähigen Material aufweist und eine Hinterseite (3) hat, die Markierungen und/oder Symbole (6, 7, 8) trägt, die dazu geeignet sind, von einer Lichtquelle (13) beleuchtet zu werden, wobei die Lichtquelle (13) in einer Öffnung (12) angeordnet ist, die in der durchsichtigen Platte (2) ausgebildet ist, und die durchsichtige Platte (2) Ablenkeinrichtungen (19) zum Richten der Lichtstrahlen (15) auf die zu beleuchtenden Markierungen und/oder Symbole (6, 7, 8) aufweist, **dadurch gekennzeichnet**, daß die genannte Öffnung (12) so gestaltet ist, daß sie mit ihrem Umfang eine Serie von Linsen (14) vorbestimmter Form ausbildet, die dazu geeignet sind, Lichtstrahlen (15) in die Schicht der durchsichtigen Platte (12) zu richten.

2. Bedienungstafel nach Anspruch 1, **dadurch gekennzeichnet**, daß die Öffnung (12) von im Wesentlichen kreisförmiger Gestalt ist und die Linsen (14) vom konvexen Typ sind, vorbestimmte Brennweiten haben und an vorbestimmten Winkelpositionen angeordnet sind.

3. Bedienungstafel nach einem der Ansprüche 1 und 2, **dadurch gekennzeichnet**, daß die Öffnung (12) die Dicke (E) der durchsichtigen Platte (2) von der Vorderseite (3) bis zur gegenüberliegenden oder Hinterseite (4) durchquert.

4. Bedienungstafel nach Anspruch 3, **dadurch gekennzeichnet**, daß die Linsen (14) gegen die Hinterseite (4) geneigt sind, um ihre Erstellung durch Gießen und Ausformen der durchsichtigen Platte zu ermöglichen.

5. Bedienungstafel nach einem der Ansprüche 3 und 4, **dadurch gekennzeichnet**, daß die Linsen (14) von der Ebene der Hinterseite (4) ausgehen und mit dieser durch konische Abschnitte (16) verbunden sind.

6. Bedienungstafel nach einem der Ansprüche 1 bis 5, **dadurch gekennzeichnet**, daß die Ablenkeinrichtungen (19) der Vorderseite der durchsichtigen Platte (2) gegenüberstehende, hohle oder reliefartige Rillen an der Hinterseite (4) derselben sind, wobei die Rillen in einer zur Vorderseite parallelen oder leicht geneigten Ebene ausgebildet sind.

7. Bedienungstafel nach einem der Ansprüche 1 bis 6, **dadurch gekennzeichnet**, daß die durchsichtige Platte (2) weiterhin wenigstens eine Spiegel (17) an einer vorbestimmten Stelle aufweist, um einen Lichtstrahls (15) abzulenken.

8. Bedienungstafel nach Anspruch 7, **dadurch gekennzeichnet**, daß der Spiegel (17) von einem geraden Rand (18) eines Fensters gebildet ist, das die Dicke der durchsichtigen Platte (2) durchquert.

9. Bedienungstafel nach einem der Ansprüche 1 bis 8 **dadurch gekennzeichnet**, daß die Vorderseite (3) mit einer undurchsichtigen Abdeckung (5) versehen ist, die die zu beleuchtenden Markierungen und/oder Symbole (6, 7, 8) trägt.

10. Bedienungstafel nach einem der Ansprüche 1 bis 9, **dadurch gekennzeichnet**, daß die Lichtquelle (13) eine Lampe oder eine Elektroluminiszenzdiode ist, die in der Mitte der Öffnung (12) angebracht ist und in einem Abstand (d) zur Ebene der Vorderseite (3) gelegen ist.

11. Bedienungstafel nach den Ansprüchen 9 und 10 in Kombination, **dadurch gekennzeichnet**, daß die undurchsichtige Abdeckung (5) auch im Bereich der Öffnung (12) undurchsichtig ist.

12. Bedienungstafel nach einem der Ansprüche 9 bis 11, **dadurch gekennzeichnet**, daß die undurchsichtige Abdeckung (5) ein Siebdruckfilm ist, der an der Vorderseite durch Verklebung oder Abformung befestigt ist.

13. Bedienungstafel nach einem der Ansprüche 1 bis 12, **dadurch gekennzeichnet**, daß die Hinterseite (4) der Vorderseite (3) gegenüberliegend eine Abdeckung (2) aus klarer Farbe, insbesondere weißer Farbe, oder aus einer Metallicfarbe trägt.

14. Bedienungstafel nach einem der Ansprüche 1 bis 13, **dadurch gekennzeichnet**, daß die durchsichtige Platte (2) aus einem organischen Glas, beispielsweise aus Polymethylmethacrylat oder aus Polycarbonat gebildet ist.

## Claims

1. Control panel for vehicle, comprising a facade (1) which comprises a transparent plate (2) composed of a material which conducts light and which has a front face (3) bearing marks and/or symbols (6, 7, 8) capable of being lit up from a light source (13), the light source (13) being disposed in an aperture (12) housed in the transparent plate (2), and the transparent plate (2) comprising deflector means (19) for directing the beams (15) towards the marks and/or symbols (6, 7, 8) to be lit up, **characterised in that** the aperture is shaped to define in outline a series of lenses (14) of selected shape, capable of directing light beams (15) through the thickness of the transparent plate (2).

2. Control panel according to claim 1, **characterised in that** the aperture (12) is of a generally circular shape and in that the lenses (14) are of a convex type, have selected focal distances and are placed at selected angular positions.

3. Control panel according to either of claims 1 or 2, **characterised in that** the aperture (12) penetrates the thickness (E) of the transparent plate (2) from the front face (3) as far as an opposite or rear face (4).

4. Control panel according to claim 3, **characterised in that** the lenses (14) are inclined towards the rear face (4) to allow them to be formed by moulding and ejection from the mould of the transparent plate.

5. Control panel according to one of claims 3 or 4, **characterised in that** the lenses (14) project from the plane of the rear face (4) and are joined thereto by conical parts (16).

6. Control panel according to one of claims 1 to 5, **characterised in that** the deflector means (19) comprise grooves and ridges formed in the rear face (4) of the transparent plate (2) opposite the front face (3), the ridges/grooves being formed in a plane parallel to or slightly inclined relative to the front face.

7. Control panel according to one of claims 1 to 6, **characterised in that** the transparent plate (2) further comprises at least one mirror (17) placed in a position selected to deflect a light beam (15).

8. Control panel according to claim 7, **characterised in that** the mirror (17) is formed by a straight edge (18) of a slot penetrating the thickness of the transparent plate (2).

9. Control panel according to one of claims 1 to 8, **characterised in that** the front face (3) is equipped with an opaque covering (5) bearing the marks and/or symbols (6, 7, 8) to be lit up.

10. Control panel according to one of claims 1 to 9, **characterised in that** the light source (13) is a lamp or an electroluminescent diode placed in the centre of the aperture (12) and situated at a distance (d) from the plane of the front face (3).

11. Control panel according to a combination of claims 9 and 10, **characterised in that** the opaque covering (5) is also opaque in the region of the aperture (12).

12. Control panel according to one of claims 9 to 11, **characterised in that** the opaque covering (5) is a film printed by the silk-screen process and fixed to the front face by adhesion or moulding on.

13. Control panel according to one of claims 1 to 12, **characterised in that** the rear face (4) opposite the front face (3) carries a covering (20) of a light colour, in particular white or metallic.

14. Control panel according to one of claims 1 to 13, **characterised in that** the transparent plate (2) is formed of an organic glass-type material, for example of methyl polymethacrylate or polycarbonate.
